# EUROPEAN PATENT SPECIFICATION

(11) **EP 3 205 569 B1**
(45) Date of publication and mention of the grant of the patent: **25.09.2019**
(21) Application number: 17155132.8
(22) Date of filing: 08.02.2017
(51) Int. Cl.: G06F 17/50, B63B 21/22, B63B 21/50, B63B 21/00

(54) **METHOD AND SYSTEM FOR SIMULATING MARINE ASSETS AS WELL AS AN ARRANGEMENT INCLUDING THE SYSTEM**
VERFAHREN UND SYSTEM ZUM SIMULIEREN VON MEERESANLAGEN SOWIE EINE ANORDNUNG MIT DIESEM SYSTEM
PROCÉDÉ ET SYSTÈME PERMETTANT DE SIMULER DES BÂTIMENTS MARINS AINSI QU'UN AGENCEMENT COMPRENANT LE SYSTÈME

(30) Priority: 09.02.2016 NL 2016246
(43) Date of publication of application: 16.08.2017
(73) Proprietor: Fugro N.V., 2264 SG Leidschendam (NL)
(72) Inventor: Alexander-Buckley, Keith, Bedford, Bedfordshire MK45 2XG (GB); Brett, Nicholas, Leighton Buzzard, Bedfordshire LU7 3UL (GB); Hall, Martin, Milton Keynes, Buckinghamshire MK4 4DH (GB); Tisdall, Jason, Kings Langley, Hertfordshire WD4 9HL (GB); Williams, Jason, Milton Keynes, Buckinghamshire MK19 6EQ (GB); Wood, Richard, Milton Keynes, Buckinghamshire MK7 8QB (GB); Doucet, Scottie, Lafayette, LA Louisiana 70508 (US)
(74) Representative: V.O.

(56) References cited:
- WO-A1-2008/129323
- WO-A2-2009/142501
- GB-A- 2 483 796

## Description

### BACKGROUND OF THE INVENTION

### Field of the invention

The present invention pertains to a method of simulating marine assets.

The present invention further pertains to a system for simulating marine assets.

The present invention still further pertains to an arrangement including such a system.

### Related art

Offshore operations are complicated in that they require a very accurate control and coordination of marine assets. Often a plurality of platforms and/or vessels may be involved. Displacing such assets requires huge forces and care should be taken to avoid damages, including damages to assets on the seabed, such as pipelines.

WO2012035354 discloses computer implemented methods that should facilitate a real-time monitoring system to avoid such hazards. In particular the cited WO application recognizes that an anchoring line has a natural curvature in the water column. The cited document further notes that the naturally occurring curve improves anchor performance, particularly in the case of large assets in deep water, by producing a lower angle of pull on the anchor, but that the risk of contact with a hazard, such as a pipeline is clearly increased. The cited documents notes that it is normal practice to monitor the tension in a mooring line, for example to prevent it from contacting a pipeline or other hazard located below the marine asset. To that end a tension meter may be used to measure the tension.

To that end the method comprises the step of determining one of three possible unknown parameters given that the other two parameters are known. The three parameters are length, tension and end location. For example if the tension meter is providing a known tension and we have a known length of mooring line, the system determines the location of the anchor.

It is noted that in the sequel the wording "line" is used not only to denote a mooring line, but to denote any elongate flexible object like a wire, rope, cable, chain and the like, or a composite object created from many different wires, ropes, cables, chains and the like being joined together to form a single "line".

### SUMMARY OF THE INVENTION

It is an object of the present invention to provide an improved arrangement for simulating offshore operations.

It is a further object of the present invention to provide an improved simulation system for use in the improved arrangement.

It is a still further object of the present invention to provide an improved method of simulating marine assets.

An improved arrangement for offshore operations is claimed in claim 1.

An improved method according to the invention is claimed in claim 10.

Therein a computational model is used of a physical system incorporating the marine assets. The computational model includes a dynamic model, modelling the physical behavior of the marine assets, as well as a graphical model to visualize the marine assets on a graphical user interface to be used by the operator. The dynamic model uses hydrodynamic and buoyancy models and further incorporates principals of drag and water entrainment. Therein a line, being one of the marine assets is modelled as a continuous entity between the winch (the start point) and the anchor (the end point) that may be in free water or in contact with the seabed or with any other modeled asset at any point along its length. For clarity it is noted that the line extending from the winch to the anchor may be modeled as comprising one or more components, rope, cable, chain and the like, each with its appropriate physical parameters such as length, stiffness, mass per unit length, diameter, drag coefficient. Any contact or touch-down point does not necessarily coincide with the junction of mutually subsequent components. Hence, the any arbitrary subdivision of the line as a first portion and a second portion is merely determined by the way it is arranged in the offshore environment, and is independent from the way the line is formed as an assembly of components. The improved computational model enables an operator to better visualize an initial and dynamic state of the marine assets. Therewith the operator is better informed, enabling the latter to more efficient control of the marine assets while mitigating hazards associated with seabed assets.

### BRIEF DESCRIPTION OF THE DRAWINGS

These and other aspects are described in more detail with reference to the drawing. Therein:
FIG. 1 schematically shows an arrangement for offshore operations,
FIG. 2 schematically shows an example of a marine asset for use in the arrangement,
FIG. 3 schematically shows an example of a marine asset for use in the arrangement,
FIG. 4 schematically shows parts of the marine asset in more detail,
FIG. 5 illustrates an example of an offshore operation,
FIG. 6 shows an example of a computational model of the marine asset and the marine environment,
FIG. 7 shows part of the simulation system in more detail,
FIG. 8 shows stages of an offshore operation and its planning,
FIG. 9 illustrates an aspect of an operation,
FIG. 10 illustrates another aspect of an operation.

### DETAILED DESCRIPTION OF EMBODIMENTS

In the following description like reference symbols in the various drawings indicate like elements unless otherwise indicated.

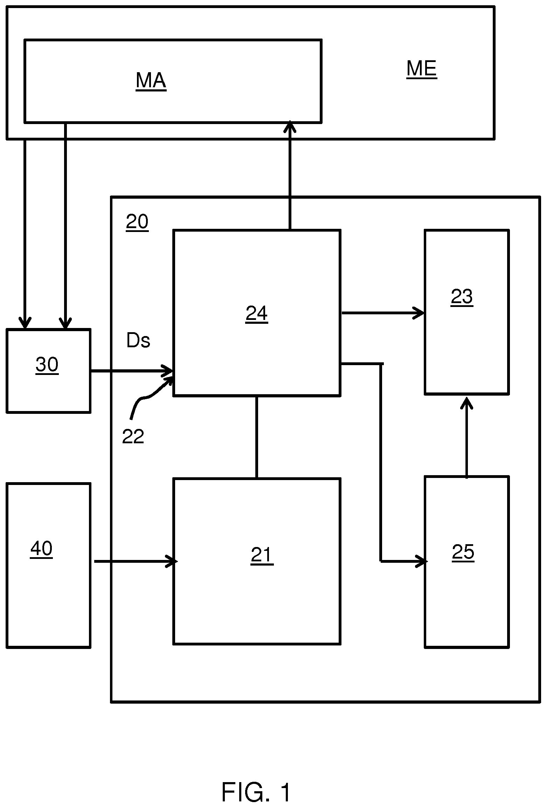

FIG. 1 schematically shows an arrangement for offshore operations, including marine assets MA in a marine environment ME and a simulation system 20.

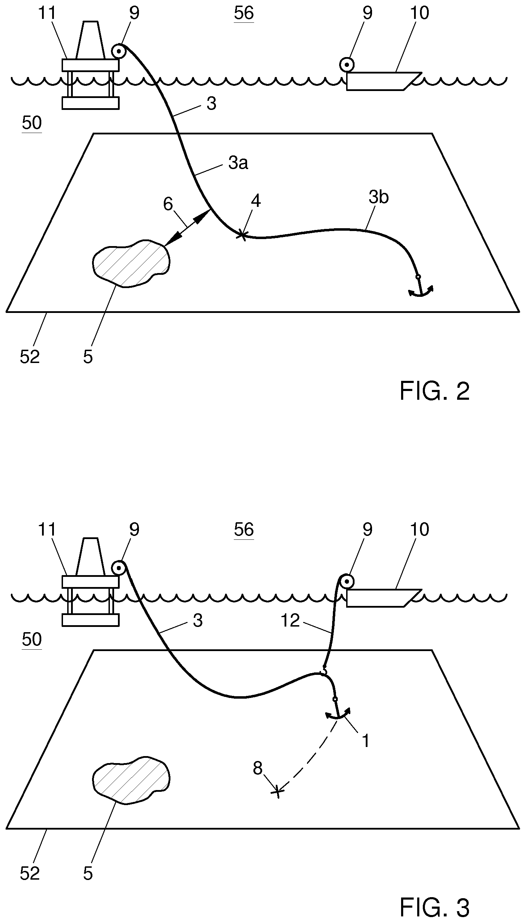

An example of marine assets MA in a marine environment ME is shown in more detail in FIG. 2. The marine environment ME is illustrated as sea 50, with seabed 52 and water surface 54 and space 56 above the water surface The marine assets in the example include at least an anchor 1, a line 3 coupling the anchor with a winch 9, and support platform 10 located offshore for supporting the winch. The support platform 10 may be movable, e.g. a vessel. A second support platform 11 e.g. a rig may be either movable or partially fixed if already partially moored. The simulation system 20 comprises computation facilities 24 and a storage space 21 storing a computational model of the marine assets. It is noted that the simulation system 20 may be provided in various ways. One possibility is to provide the simulation system 20 as a central server that may be arranged onshore, and that communicates with clients involved in the offshore operations. Alternatively, individual marine assets may have proper computation facilities that operate together to function as a simulation system 20. Other variants are possible too wherein elements of the marine asset have more or less computational resources. Computational resources may be provided as dedicated hardware, as generally programmable devices having a dedicated simulation program, as dedicated programmable hardware having a dedicated simulation program, or combinations thereof. Also configurable devices may be used, such as FPGA's.

Separate modelling tools 40 may be provided to create the computational model. Alternatively, these tools 40 may be integrated in the simulation system. The simulation system further has inputs 22 for receiving sensor data Ds from one or more sensors 30. The sensor data Ds may include data indicative for a state of the marine assets, e.g. a position of the anchor 1, a tension measured on the line 3 and/or data indicative for a state of the environment wherein the marine assets are used, such as a magnitude and direction of sea currents, and a height of the water column above the seabed 52. Sensor 30 used for this purpose may include position sensor, such as GPS devices, inertial sensors, such as gyro devices and acceleration sensors, tension meters, height meters, winch payout meters, wind velocity meters, sea current meters, and the like. A user interface, typically a graphical user interface 23 is provided for enabling an operator to monitor and to provide control input to control the simulated offshore operations. The simulation system 20 includes computation facilities 24 for simulating the marine assets 1,3,9, 10 based on the received sensor data, and the control input while using the computational model. In the embodiment shown the simulation system 20 further includes a recording unit 25. The recording unit 25 is adapted to record operations for replay and analysis at a later point in time. The user interface 23 may be used for this purpose. The computation facilities 24 provide simulated actuator control signals for simulated actuators that represent the physical control signals that would be needed to control the actuators in the marine assets represented by said simulated actuators. A typical example of an actuator is a winch 9 that pays out or pulls in a line. The actual position and orientation of the vessel may be accurately estimated, for example using satellite measurements and be provided as input data to the computational model.

FIG. 2 schematically shows an example of marine assets used in an offshore operation, as well as their mutual relations. Therein reference numeral 1 represents an anchor on a surveyed seabed 52. Any anchor type is possible. The surveyed seabed 52 is a graphical and collision based model built up from a surveyed height map. A line 3 (or chain 3 or the like) is shown to which the anchor 1 is attached. In the example shown, it is presumed that the line 3 is rolled from a winch 9 mounted on the rig 10. The first portion 3a of the line 3 extends between the winch 9 by which it is paid out to a point of departure 4 where it touches the seabed 52. The second portion 3b extends from the point of departure 4 to the anchor 1. This second portion may form a mud loop in the (surface of the) seabed 52 and may also span across dips and trenches in the seabed as measured by survey instruments. During execution of an offshore operation care should be taken not to damage seabed assets 5, such as pipelines, power cables and the like.

The graphical interface 23 may use the graphical model to provide for a graphical representation, for example a 3D representation, of the marine assets involved in the offshore operation. The graphical representation further may indicate the assets 5 on the seabed 52, and may in addition provide for a visual indication 6 of proximity between the marine assets and the seabed assets. Alternatively or in addition, an audible indication may be given.

FIG. 3 schematically shows an example of marine assets used in an offshore operation, as well as their mutual relations. In this case, the anchor is not yet on the seabed 52, but rather is suspended from a work wire 12 from the vessel 10. The graphical interface 23 may further indicate the drop point 8. This is the point at which the anchor is expected to land on the seabed 52 as a result of the combination of forces acting on the work wire 12, in case the work wire would break. A visual or audible warning may be given if the drop point is in a proximity region of a seabed asset 5. As in that case the breaking of a line would have a greater impact than in case the drop point is outside the proximity region, the operator can decide to adapt the operation, for example by carrying out the operation at a lower speed or by changing the trajectory, to mitigate the risk of damage. The simulation system enables the operator to simulate a number of variants of the operation to determine the variant that most efficiently avoids this risk.

It is further recognized that the second portion 3b of the line 3 may have a complicated shape 3D shape, in that it may be accidentally draped along a seabed surface 52.

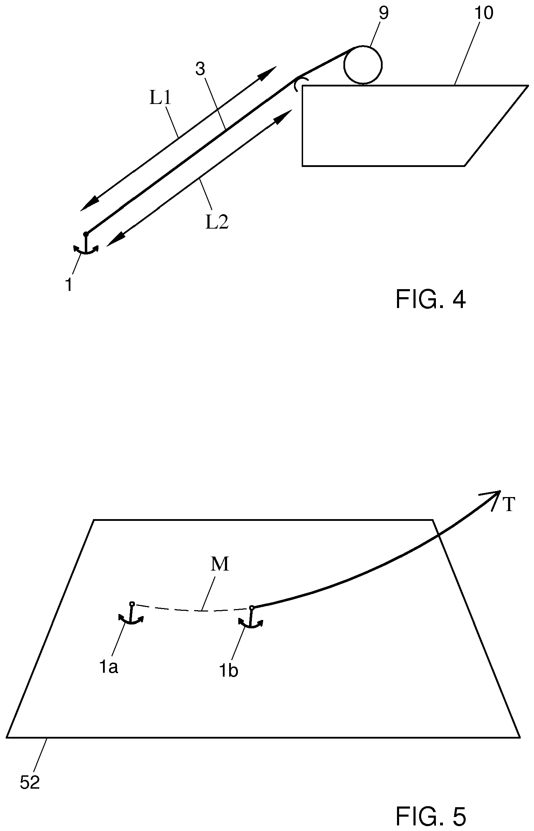

FIG. 4 shows elements of the marine asset in more detail. In the example shown in FIG. 4 it is presumed that the payout of the winch 9 is generally updated manually by the operator at sporadic times. Therein L1 indicates the length of line/chain 3 paid out by the simulated winch,, i.e. the simulated winch payout and L2 indicates the actual distance between the winch outlet and the end position of the cable (in this case constrained by the anchor position). The length L2 can be smaller than L1, in case the line 3 forms a loop. In an embodiment the winch 9 is provided with a winch payout automation. This functionality adapts the simulated winch payout L1 to a higher value in case it detects that a length L2 exceeds the current value of L1. Therewith the winch payout automation functionality achieves that a simulated value for the tension remains within reasonable bounds, i.e. that it does not assume an exceptional high value.

Therewith it avoids failing of the simulation. Such failure could in turn result in physical damage to the marine assets due to erroneous decisions. Upon detecting and adapting the value for L1, the winch payout automation functionality may issue an alert signal to warn the operator that the provided input was out of date.

FIG. 5 illustrates an anchor drag modelling method, wherein a tension T is exerted causing the anchor to drag along the seabed 52. Therein 1a indicates the anchor in laid position, and 1b indicates the estimated position of the anchor. The computational model estimates the position 1b from the combination of the measured cable tension and the measured cable payout. I.e. it estimates the expected trajectory M along which the anchor must have been dragged along the seabed 52 from its initial laid position, taking into account these measured values to reach a new equilibrium point between drag forces and seabed friction, after it is moved along a trajectory M along the seabed 52. To estimate these forces the method employs a model of the marine assets and the marine environment, in particular a graphical and collision based model of the seabed 52 built up from a surveyed height map as is specified in more detail below.

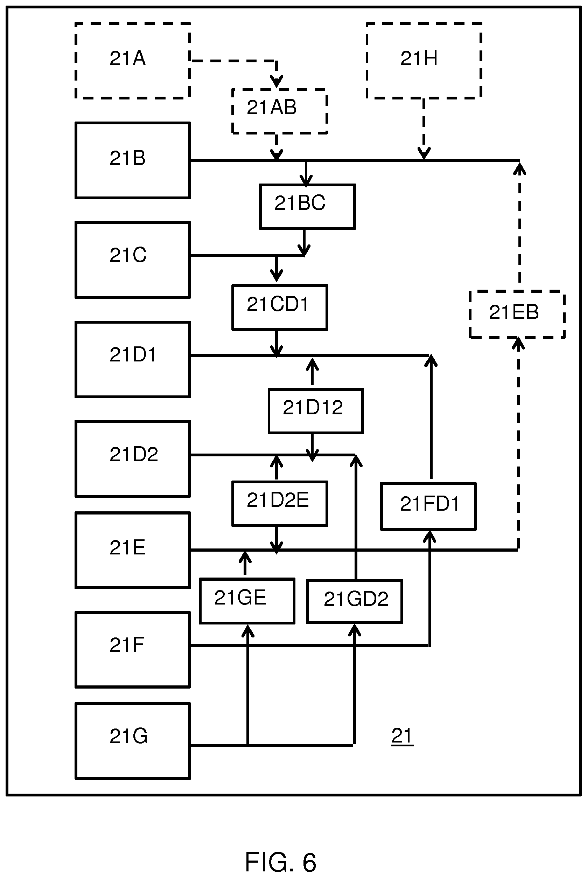

An exemplary model as stored in storage space 21 of the simulation system 20 is now discussed in more detail with reference to FIG. 6. The model specifies the marine assets as well as the environment wherein the marine assets are used. In the embodiment shown the specification for the marine assets respectively includes a specification 21B, 21C of a platform 10 or 11 and a winch 9 arranged thereon, a specification 21D1, 21D2 of the line 3, and a specification 21E of the anchor 1. The specification of the environment here includes, a specification 21F of the sea currents and water level, a specification 21G of the seabed 52 and a specification 21A of wind velocity and direction. The specification 21G of the seabed in particular specifies the seabed as a 3D surface. I.e. it specifies a height h of the seabed as a function of a lateral position x, y. The specification may further include a surface descriptor, indicative for friction and deformability. I.e. a surface formed by sand is deformable but exerts frictional forces on a line, whereas a surface formed by rocks is not deformable.

In the embodiment shown in FIG. 6 the model specifies in specification module 21C the winch 9 in terms of its payout (length of line 3 extending between the winch 9 and the anchor 1), speed with which the line 3 is released or pulled in, the tension T exerted by the winch 9 on the line 3, and the position where it is attached on the support platform 11. The platform is represented by specification module 21B. In case of a fixed platform it suffices that specification 21B includes its coordinates. The coordinates specifying the position where the winch 9 is arranged on the platform may be included in specification 21C. In case the platform is a moving object, such as a vessel, its current position and orientation may be measured by positional sensors, such as GPS devices, gyroscopes and other navigation tools. Alternatively, as indicated by dashed lines and boxes, its current position and orientation may be estimated based on the balance of forces resulting from the interaction with the line 3, via the winch 9, the forces exerted thereon by sea currents, as exemplified by specification module 21EB, the forces exerted thereon by air currents, modeled in specification 21AB, and actuation forces exerted by actuators 21H.

The line 3 is specified in specification 21D1 and 21D2 in terms of its mass per unit length in air and water, stiffness, drag co-efficients, length, and its displacement per unit length. Therein the line may have multiple segments with mutually different properties. In particular in the model used for the marine assets, a line 3 is modelled as having a first portion 3a represented by specification 21D1 and a second portion 3b represented by specification 21D2. The first portion 3a is defined as the portion extending between the winch 9 and a touch-down point 4 where the line touches the seabed 52. The second portion 3b is the portion extending between the touch-down point 4 and the anchor 1. Hence, the first portion 3a extends in the water column, and the second portion 3b extends along the seabed 52. Both portions may be modelled as a 3D form, comprising a chain of line elements, wherein mutually subsequent elements are flexibly coupled to each other. The shape of the 3D form representing portion 3a is calculated using the cable physical properties, sea currents and vessel motion and winch payout. The shape of the 3D form representing portion 3b is calculated using the cable physical properties, the forces exerted thereon by the anchor 1 and by the seabed 52. The anchor 1 is specified by specification 21E in terms of its mass, geometry and connection points. The interaction between the anchor 1 and the seabed 52 may be modelled in specification module 21GE. In an embodiment of this model it is presumed that the anchor has a fixed position if a force F exerted thereon does not exceed a threshold value Ft, that anchor starts moving if the force exerted thereon achieves this value, and that the tension exerted by the anchor on the line remains constant upon pulling the anchor with the line, regardless the speed with which the anchor is pulled. I.e. in that stage the anchoring element behaves as a constant tension joint.

Also other objects may be included in the model. For example buoyant elements may be attached between subsequent segments of the line 3. Like the anchor 1, buoyant elements may be specified in terms of their mass, geometry and connection points.

The model further includes in specification 21B the position of the support platform 10, e.g. a vessel or or 11 e.g. a rig. Sensors may be provided to specify the actual values of the position and velocity may be calculated from the position data if required. Alternatively the actual values may be estimated or entered by an operator, using the user interface 23. The model may also specify available winch attachment points of the support platform. This is in particular relevant when planning an operation.

In the embodiment shown, the model further includes a specification of attachments between all work vessels, rigs and other vessels and all wires, ropes, cables and chain, and with all anchors, floats and other objects associated with the operation. In particular this specification is incorporated in specification modules 21BC, 21CD1, 21D12, 21D2E. Therein specification module 21BC specifies the arrangement of the winch 9 on the support platform 10. Specification module 21CD1 specifies the connection between the winch 9 and the first portion of line 3. Specification module 21D12 specifies the interaction between the first portion 3a and the second portion 3b of the line 3. Specification module 21D2E specifies the connection between the second portion 3b of theline 3 and the anchor 1. This data may be entered by an operator using the user interface 23. Alternatively, or in additions sensors may be provided to detect the presence or absence of an attachment and to signal the same to the simulation system 20.

The model of FIG. 6 further includes a graphical and collision based model 21G built up from a surveyed height map of the seabed 52. The model may further specify the expected interaction with marine assets. In the embodiment shown, specification module 21GE specifies the interaction between the anchor 1 and the seabed 52, in particular it specifies the frictional forces exerted by the seabed 52 on the anchor 1. Specification module 21GD2 the such as the amount of friction it will exert on a line or anchor on the seabed 52.

In specification 21F the model also specifies sea current velocities in both direction and magnitude, and the sea tide heights. It further specifies the interaction (See block 21FD1) thereof on the marine assets, in particular the effects on the line 3.

In specification 21A, the model also specifies wind velocities and sea states in both direction and magnitude. This is particularly relevant in the case the support platform is movable, such as a vessel, and the vessel's response thereto is not measured, but instead calculated on the basis of the model.

The model can be defined using the modelling tools 40. Some aspects may be variable, and the actual value thereof may be determined by sensors 30 or estimated from other values.

During an operation the marine assets are simulated by a simulation system 20. In a simple operation the simulation system 20 may for example simulate the position of an anchor, based on input data indicative for measured values of related variables, e.g. a position and orientation of the vessel, a tension measured in the line connected to the anchor, a payout of the winch 9 that controls the line and the like. In more complex operations the simulation system may simulate a substantially larger marine asset, for example comprising a plurality of vessels, lines, anchoring elements and the like. The simulation system may receive input signals from an operator and sensor signals from various sensors, such as tension sensors, position sensors, sea current sensors and the like. By way of clarifying example it is now presumed that the marine asset to be simulated comprises a winch 9, mounted on a platform 11, which may be transportable, and a line 3 which is payed out by the winch 9 and having an anchor 1 fixed to its end. At any point along its length, the line 3 may be attached via a work wire 12 to a work vessel 10.

In operation the simulation system performs a continuously repeated computation for estimating a shape of the line 3 using a computational model of the marine assets.

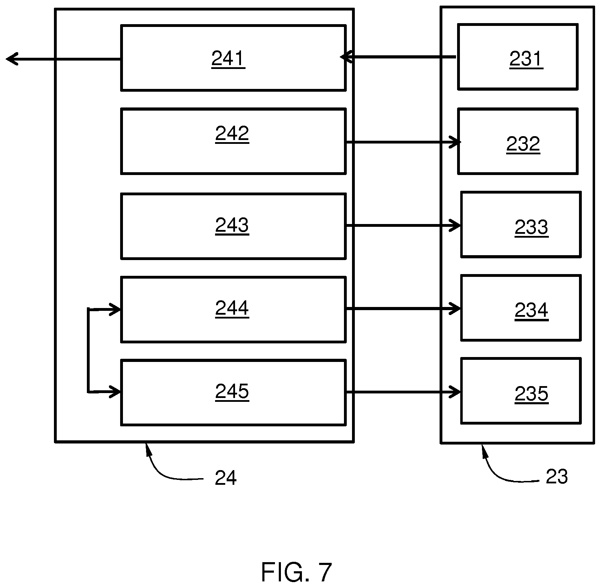

In an embodiment, as illustrated in FIG. 7, the simulation system includes various mechanisms to alert the operator in case of potential risks or to override operator input to avoid such risks.

A potential risk that may occur in a situation wherein the operator provides input data for the simulation that would lead to unrealistic simulation states, e.g. exceptionally high estimations for forces on the marine assets that are simulated by simulation system. In these circumstances it is likely that the simulation fails. To avoid such risk, the simulation system includes an input data verification module 241 that verifies the input data taking into account the current state of the marine assets as determined by the simulation system. If the input data provided by the operator is within predetermined bounds e.g. it is physically possible, taking into account said determined current state it uses the input data provided by the operator for simulation of the marine assets. Should it be determined however by the input data verification module 241 that the input data is outside the predetermined bounds, it uses adapted input data for the simulation of the marine assets in order to avoid failure of dynamic models due to excess and unrealistic forces being placed on them. In the embodiment shown in FIG. 7 the input data verification module 241 is a winch data verification module 241. The simulation system includes a user interface element 231 for enabling the operator to set winch data. The simulation system includes a winch data verification module 241 that verifies that the winch data is valid. In case the winch data verification module 241 detects that the winch data provided by the operator has a value in a range outside the current valid range that can be properly handled by the dynamic model for simulating the marine assets it provides for a correction of the winch data to ensure that dynamic models do not fail due to excess and unrealistic forces being placed on them. Alternatively or in addition input data verification modules may be provided for verifying and optionally adapting user input for simulation of other marine assets.

It is noted that a control system for actually controlling the marine assets that is used next to the simulation system may alternatively or additionally include physical safety measures. For example an auto-winch payout may be provided to provide for an automatic payout of the line associated with a winch in case a tension in said at least one line exceeds a threshold value. An alert may be given in case this occurs.

FIG. 7 shows the following additional alert mechanisms in the simulation system. A sensor data verification module 242 is provided that verifies the validity of sensor data. If it detects the absence of recent sensor data from a sensor it activates an alarm module 232 to alert the operator. Additionally a proximity detection module 243 is provided that detects if proximity limits are exceeded and activates an alarm module 233 to alert the operator. Proximity limits may be set for assets on the seabed, such as pipelines, cables as well as for marine assets, so that an alert message given by the alarm module 233 enables the operator to change the operation planning or to warn other vessels that exceed the proximity limits of the marine assets. Alert messages may be given by the alarm modules 231, 232, 233 and 234 (discussed in more detail below) in any form, for example as an audible or a visual alert signal.

FIG. 7 further shows a collision alert module 244 that detects possible risks of collision between marine assets and seabed assets, and that alerts the operator upon such detection, using user interface module 234. The collision alert module 244 is associated with a planning module 245 to plan a towing scheme that achieves a positioning of the anchor at an envisaged target position while avoiding that the second portion of the line and the anchor collide with the seabed asset. The planning module 245 may graphically illustrate the planned towing scheme on the user interface module 235, so that the operator can control the operations in accordance with this plan. Alternatively, the operations may be carried out automatically according to the planned towing scheme.

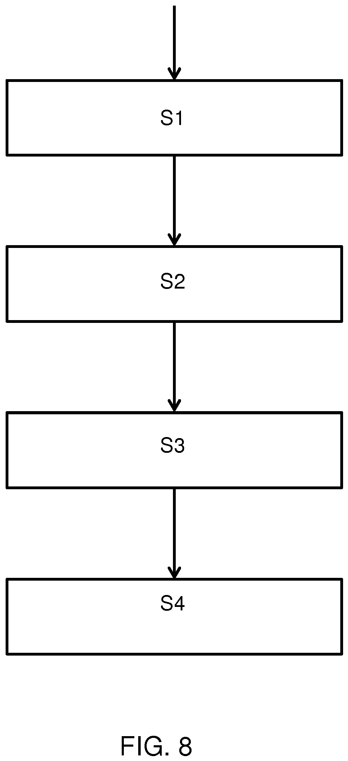

FIG. 8 schematically illustrates various stages involved in an offshore operation.

As a first step S1, acomputational model may be prepared, for example a model as shown in and discussed with reference to FIG. 6, graphically and dynamically representing the marine assets and the offshore environment wherein the operation is to take place. The model may be composed using modelling tool 40. For this purpose the modelling tool 40 may specify available components and their mechanical behavior, or allow the operator to enter new specifications.

In a next step S2 an offshore operation is planned, for example using modeling tools 40. Planning involves using the computational model of the marine assets to predict the actions to be taken to achieve the desired result of the offshore operation. Typical offshore operations are for example a mooring operation, an anchoring operation, a rig-move operation, a lay operation or a recovery operation. Depending on the type of offshore operation a different marine asset may be used. In a simple offshore operation the marine asset involved may comprise an anchor, a line coupling the anchor with a winch, and a platform, such as a vessel or a rig located offshore that supports the winch. In more complex offshore operations the marine asset involved may comprise a plurality of work vessels, rigs and other vessels, wires, ropes, cables, chains, anchors, floats and other objects associated with the operation that need to be coordinated.

In a further step S3, the initial state of the marine assets MA is estimated using a static solver. The static solver, for example executed by processing facility 24 may use current data to estimate the current state as an initial state. This estimation may for example include the estimation of the current state of a portion of a line on the seabed. I.e. the current shape of that line portion is calculated based on the current dataset, taking into account the three dimensional shape of the seabed. It is important to estimate the current state to be able to predict movements that occur during actuation of the marine assets. For example a portion of a line draped on the seabed may hit seabed assets when it is pulled taut in an operation. As an offline activity for review and planning, historical data obtained from recording unit 25 could be input as though it were current data to restart the simulation from an arbitrary point in the past.

In a still further step S4 a dynamic solver is used to dynamically estimate a state of said marine assets. The dynamic solver starts from the initial state as estimated by the static solver and estimates how this state changes due to the forces exerted by the actuators in said marine assets and external forces exerted by the marine environment. The dynamic solver calculates in addition to the current state also information of states that could occur in case of a hazard. For example it calculates a drop point, being the point where the anchor would land in case of a work wire break.

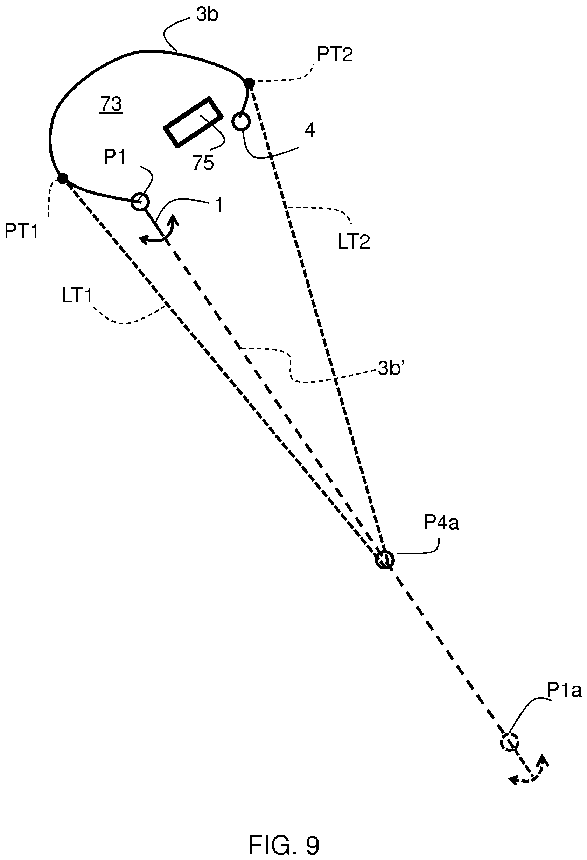

FIG. 9 schematically shows a situation, wherein an anchor 1 is positioned on the seabed 52 in position P1. A portion 3b of the line 3 is draped on the seabed 52, forming a mudloop. A seabed asset, marked by a security zone 75 is arranged on the seabed.

In the absence of knowledge about the shape of the second portion 3b of the line it might be envisaged to directly tow the anchor 1 towards a target position P1a, as the security zone 75, associated with a seabed asset is not crossed by the imaginary line 3b' extending from the current position of the anchor to its target position.

The simulation system 20 according to the present invention determines the actual shape of the second portion 3b of the line. With this information, the collision alert module 244 can estimate the zone traversed by the second portion 3b of the line that would be traversed in case the anchor 1 is towed towards a target position P1a.

The collision alert module 244 calculates a traversal zone 73 from an estimated shape of the second portion 3b of the line and an envisaged target position P1a of the anchor 1. In case that the traversal zone 73 overlaps a security zone 75 associated with a seabed asset it generates an alert signal for example using a user interface element 235, for example of graphical user interface 23.

A traversal zone 73 can be defined by the path along which the portion 3b of the line extends from the position of the anchor 1 to the touch-down point 4, and the envisaged touch-down point indicated by P1a.

This can be done as follows. First a position P4a is constructed on an imaginary line extending from the current position P1 of the anchor to the envisaged target position P1a of the anchor 1. A position P4a on that line is selected that has a distance to the anchor position P1 corresponding to the length of the second portion 3b of the line. Then tangent lines LT1, LT2 are constructed from said position P4a to the curve defined by the second portion 3b of the line. Next the traversal zone 73 is defined as the area enclosed by the tangent lines LT1, LT2 and the portion of the curve extending between the tangent points PT1, PT2 of the tangent lines LT1, LT2 with the curve.

This definition of the traversal zone gives a reasonably accurate approximation of the area that is traversed by the second portion 3b of the line when it is pulled in the direction of the envisaged target position P1a in order to position the anchor at that location.

From the estimated traversal zone 73, it is apparent that there is a clear risk that when towing the anchor directly in that direction, the second portion 3b of the line will come across the security zone of the seabed asset and may cause damage thereto, as it overlaps the security zone 75. Upon detecting this condition the collision alert module 244 issues an alert signal to user interface module 234, so as to alert the operator about this condition.

As an alternative the traversal zone may be estimated as the area enclosed between alternative tangent lines constructed from the envisaged target position P1a and the curve, and the portion of the curve extending between these alternative tangent lines. In again an alternative embodiment the traversal zone may be estimated using a circumscribing element, e.g. a bounding box, a bounding ellipse or a convex hull constructed around the second portion 3b of the line. Then alternative tangent lines that are tangent with the circumscribing element. A starting point of these alternative tangent lines may be the position P4a, the position P1a or a position between those positions on the imaginary line. Next the traversal zone is estimated as the area enclosed between these tangent lines and the portion of the circumscribing element extending between the tangent points with these tangent lines.

In an embodiment, the simulation system further includes a planning module 245 to schedule a towing scheme that achieves a positioning of the anchor at the envisaged target position P1a while avoiding that the second portion of the line 3b and the anchor collide with the seabed asset. The planning module 245 may generate a towing plan that achieves that the anchor achieves its target position P1a, while avoiding that the second portion of the line 3b crosses the security zone 75. The planning module 245 may interact with the collision alert module 244 to verify that each stage of the plan avoids a collision.

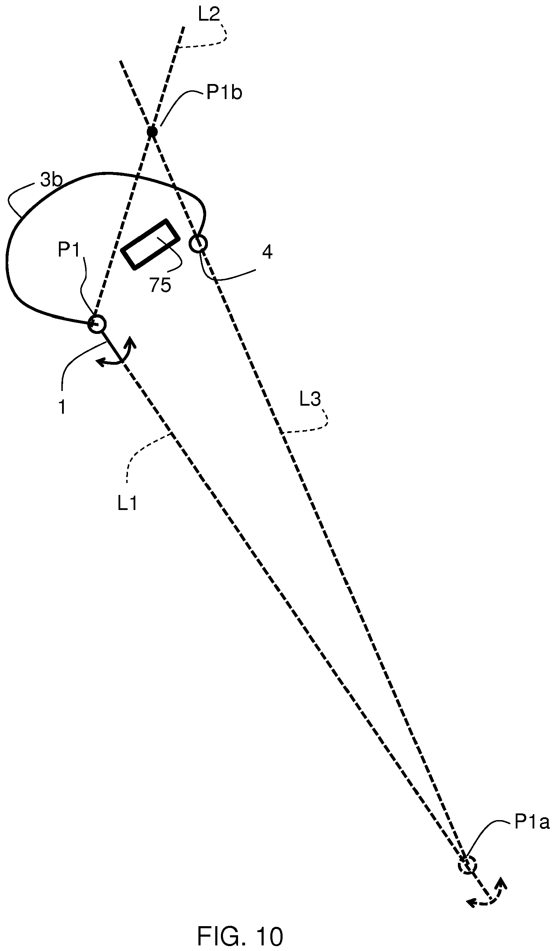

One approach of the planning module 245 is illustrated in FIG. 10. Therein it constructs a first, a second and a third imaginary line L1, L2, L3. The first line L1 extends from the current position P1 of the anchor 1 to the envisaged anchor position P1a. The second and a third line L2, L3 are constructed to depart from the current anchor position P1 and the envisaged target position P1a, so as to form a smallest enclosing triangle for the security zone 75 of the seabed asset. I.e. the smallest triangle that can be constructed using these two positions P1, P1a, that fully encloses the security zone 75. This smallest triangle defines a third position P1b. The envisaged anchor position P1a can be reached without risking damage to the seabed asset by first towing the anchor 1 towards the third position P1b along the line extending from position P1 to P1b and subsequently towing the anchor from that position P1b to the envisaged target position P1a, along the line extending from position P1b to position P1a. It is noted that other towing schemes are possible that avoid a collision. For example a towing scheme based on a triangle that encloses the smallest enclosing triangle. This would however result in a longer trajectory to be followed by the anchor. Alternatively it may be consider to provide a towing scheme having more than two stages, e.g. a towing scheme wherein the anchor is towed as closely as possible along the security zone 75. This would shorten the trajectory, but would involve a more complicated planning. This alternative towing scheme would also involve a first stage, wherein the anchor is towed in the direction of the third position P1b until it approaches the security zone 75.

While the present invention has been described with respect to a limited number of embodiments, those skilled in the art will appreciate numerous modifications and variations therefrom within the scope of this present invention as determined by the appended claims.

## Claims

1. An arrangement for offshore operations, including marine assets (MA) and a simulation system (20), the marine assets (MA) including at least an anchor (1), a line (3) coupling the anchor with a winch (9), and a movable or fixed support platform (10 or 11) located offshore for supporting the winch, the simulation system comprising a storage space (21) storing a computational model of the marine assets, inputs (22) for receiving sensor data (Ds) pertaining to a state of the marine assets and/or of an environment wherein the marine assets are used, a user interface (23) for enabling an operator to monitor and to provide input data to control the simulation, wherein the simulation system is provided for computing additional information pertaining to a state of said marine assets and for graphically representing said marine assets based on said received sensor data and said control input using said computational model, wherein said at least a line is modelled as a first portion (3a) extending between the winch (9) and a touch-down point (4) where the line (3) touches the seabed (52) and a second portion (3b) extending between the touch-down point (4) and the anchor (1), **characterized in that** the additional information comprises information specifying an estimated position of said anchor, and wherein said sensor data comprises a value indicative for a measured tension in said line, a value for the measured payout of said line by said winch, and wherein the simulation system computes the estimated position using said computational mode by estimating a trajectory between an original, laid position of said anchor to said estimated position along which the anchor is expected to have been dragged along the seabed taking into account these measured values to reach a new equilibrium point between drag forces and seabed friction.

2. The arrangement according to claim 1, wherein said anchor is dynamically modelled as (i) having a fixed position if a force (F) exerted thereon does not exceed a threshold value (Ft), (ii) a being displaced if the force exerted thereon achieves said threshold value, and (iii) keeping said line at a constant tension when it is pulled therewith, regardless the speed with which the anchor is pulled.

3. The arrangement according to claim 1, wherein the simulation system is further provided to generate simulated actuator control signals for simulated actuators that represent the physical control signals that would be needed to control actuators in said marine assets.

4. The arrangement according to claim 1, wherein said simulation system comprises a static solver to determine an initial state of said marine asset, and a dynamic solver to estimate a state of said anchoring tools using a computational model of said marine asset wherein such model also comprises one or more of sea currents, seabed touch down and friction occurring during said offshore operation.

5. The arrangement according to claim 1, wherein the simulation system includes an input data verification module (241) to verify whether input data is within predetermined bounds associated with the current state of the marine assets as determined by the simulation system.

6. The arrangement according to claim 5, further including an adaptation module to adapt said input data to be in a range within said predetermined bounds for the simulation system.

7. The arrangement according to claim 5 or 6, wherein the input data verification module (241) is a winch data verification module.

8. The arrangement according to any of the previous claims, comprising a collision alert module (244), which calculates a traversal zone (73) from an estimated shape of the second portion (3b) of the line and an envisaged target position (P1a) of the anchor (1), and which generates an alert signal if said traversal zone overlaps a security zone (75) associated with a seabed asset (5).

9. The arrangement according to claim 8, further comprising a planning module (245) to schedule a towing scheme that achieves a positioning of the anchor at the envisaged target position (P1a) while avoiding that the second portion of the line (3b) and the anchor collide with the seabed asset.

10. A method for simulating marine assets (MA) in an offshore operation using the arrangement according to one of the claims 1 to 9, said marine assets comprising at least an anchor, a line coupling the anchor with a winch, and a support platform located offshore for supporting the winch, said simulating at least including a computation stage for estimating a state of said marine assets using a computational model and using received sensor data (Ds) pertaining to a state of the marine assets and/or of an environment (ME) wherein the marine assets are used, said controlling further including receiving input data from an operator for controlling said simulation, and computing additional information pertaining to a state of said marine assets based on said received sensor data and said input data using said computational model, wherein the computational model of the marine assets (MA) includes at least a specification (21E) of an anchor (1), a specification (21C) of a winch (9) and a specification (21D1, 21D2) of a line (3) coupling the anchor with the winch (9), wherein said at least a line is modelled as a first portion (3a) extending between the winch (9) and a touch-down point (4) where the line (3) touches the seabed (52) and a second portion (3b) extending between the touch-down point (4) and the anchor (1), **characterized in that** the additional information comprises information specifying an estimated position of said anchor, and wherein said sensor data comprises a value indicative for a measured tension in said line, and a value for the measured payout of said line by said winch, and wherein the simulation system computes the estimated position by estimating a trajectory between an original, laid position of said anchor to said estimated position along which the anchor is expected to have been dragged along the seabed taking into account these measured values to reach a new equilibrium point between drag forces and seabed friction.

11. The method according to claim 10, wherein said anchor is dynamically modelled as (i) having a fixed position if a force (F) exerted thereon does not exceed a threshold value (Ft), (ii) a being displaced if the force exerted thereon achieves said threshold value, and (iii) keeping said line at a constant tension when it is pulled therewith, regardless the speed with which the anchor is pulled.

12. The method according to claim 10, comprising a first operational stage (S3), wherein a static solver is used to determine a current state of said marine assets, the current state including at least the current state of said first portion (3a) of said line (3) and the current state of said second portion (3b) of said line (3) and comprising a second operational stage (S4) wherein a dynamic solver is used to dynamically estimate a state of said marine assets resulting from forces exerted by the actuators in said marine assets and external forces exerted by the marine environment.

13. The method according to claim 12, wherein said dynamic solver uses a specification of sea currents to estimate a state of said first portion (3a) of said line (3) and a specification of the seabed to estimate the state of the second portion (3b) of said line (3).

14. The method according to claim 12, wherein the static solver uses current or historical data acquired for the marine assets to estimate the current state of said marine assets.

15. The method according to claim 10, wherein said state includes a drop point, being the point where the anchor would land in case of a work wire break.

16. The method according to claim 10, wherein said at least one winch provides for an automatic payout of the at least one line in case a tension in said at least one line exceeds a threshold value.

17. The method according to claim 10, wherein said at least one winch provides an output signal for use by said dynamic solver, indicative of it payout.

18. The method according to claims 16 or 17, providing for an error message in case said automatic payout occurs.

19. The method according to claim 10, wherein said computational model includes a model of seabed slip of an anchoring element as a constant tension joint.

20. The method according to claim 10, wherein said offshore operation is a mooring operation, an anchoring operation, a rig-move operation, a lay operation or a recovery operation.

## Patentansprüche

1. Anordnung für Offshore-Tätigkeiten, einschließlich Meeresanlagen (MA) und ein Simulationssystem (20), wobei die Meeresanlage (MA) mindestens einen Anker (1), eine Leine (3), die den Anker mit einer Winde (9) verbindet, und eine bewegliche oder feststehende Trageplattform (10 oder 11) einschließt, die sich offshore zur Unterstützung der Winde befindet, wobei das Simulationssystem einen Speicherplatz (21) umfasst, der ein Berechnungsmodell der Meeresanlagen speichert, Eingänge (22) zum Empfangen der Sensordaten (Ds), die zu einem Zustand der Meeresanlage und/oder einer Umgebung gehören, in der die Meeresanlagen genutzt werden, eine Benutzeroberfläche (23), um es einem Bediener zu ermöglichen die Simulation zu überwachen und Eingangsdaten zur Steuerung der Simulation zur Verfügung zu stellen, wobei das Simulationssystem für die Berechnung zusätzlicher Informationen, die zu einem Zustand der Meeresanlagen gehören, und für die grafische Darstellung der Meeresanlagen anhand der empfangenen Sensordaten vorgesehen ist und wobei der Steuereingang das Berechnungsmodell nutzt, wobei die mindestens eine Leine als ein erster Abschnitt (3a), der sich zwischen der Winde (9) und einem Aufsetzpunkt (4) erstreckt, an dem die Leine (3) den Meeresboden (52) berührt, und als ein zweiter Abschnitt (3b) gestaltet ist, der sich zwischen dem Aufsetzpunkt (4) und dem Anker (1) erstreckt, **dadurch gekennzeichnet, dass** die zusätzlichen Informationen Informationen enthalten, die eine geschätzte Position des Ankers bezeichnen, und wobei die Sensordaten einen Wert, der auf eine gemessene Spannung in der Leine hinweist, einen Wert für den gemessenen Ablauf der Leine durch die Winde umfassen und wobei das Simulationssystem unter Verwendung des Berechnungsmodus die geschätzte Position berechnet, und zwar durch Schätzen einer Bahn, entlang der der Anker erwartungsgemäß auf dem Meeresboden gezogen wurde, und zwar zwischen einer ursprünglichen Position, an der der Anker gesetzt wurde, bis zur geschätzten Position, an der unter Berücksichtigung dieser gemessenen Werte ein neuer Gleichgewichtspunkt zwischen den Zugkräften und der Reibung am Meeresboden erreicht wurde.

2. Anordnung nach Anspruch 1, wobei der Anker dynamisch geformt ist, und zwar (i) mit einer festen Position, wenn eine Kraft (F), die auf ihn wirkt, einen Schwellenwert (Ft) nicht überschreitet, (ii) verschoben, wenn die auf ihn wirkende Kraft den Schwellenwert erreicht, und (iii) die Leine bei einer konstanten Spannung haltend, wenn er damit gezogen wird, ungeachtet der Geschwindigkeit, mit der der Anker gezogen wird.

3. Anordnung nach Anspruch 1, wobei das Simulationssystem ferner dafür vorgesehen ist, simulierte Antriebssteuersignale für simulierte Stellantriebe zu generieren, die physische Steuersignale darstellen, die benötigt werden würden, um Stellantriebe in den Meeresanlagen zu steuern.

4. Anordnung nach Anspruch 1, wobei das Simulationssystem einen statischen Solver, um einen Ausgangszustand der Meeresanlage zu bestimmen, und einen dynamischen Solver umfasst, um einen Zustand der Ankerwerkzeuge unter Verwendung eines Berechnungsmodells der Meeresanlage zu schätzen, wobei ein solches Modell außerdem eine oder mehrere Meeresströmungen, das Aufsetzen auf dem Meeresboden und die Reibung umfasst, die bei der Offshore-Tätigkeit auftritt.

5. Anordnung nach Anspruch 1, wobei das Simulationssystem ein Eingangsdaten-Verifizierungsmodul (241) einschließt, um zu verifizieren, ob die Eingangsdaten innerhalb der vorgegebenen Grenzen liegen, die laut Feststellung durch das Simulationssystem mit dem aktuellen Zustand der Meeresanlagen verbunden sind.

6. Anordnung nach Anspruch 5, ferner ein Adaptionsmodul einschließend, um die Eingangsdaten so anzupassen, dass sie in einem Bereich innerhalb der vorgegebenen Grenzen für das Simulationssystem liegen.

7. Anordnung nach Anspruch 5 oder 6, wobei das Eingangsdaten-Verifizierungsmodul (241) ein Windendaten-Verifizierungsmodul ist.

8. Anordnung nach einem der vorhergehenden Ansprüche, ein Kollisionswarnmodul (244) umfassend, das eine traverse Zone (73) von einer geschätzten Form des zweiten Abschnitts (3b) der Leine und einer geplanten Zielposition (P1a) des Ankers (1) berechnet und das ein Warnsignal generiert, wenn die traverse Zone eine Sicherheitszone (75) überlappt, die mit einer Anlage auf dem Meeresboden (5) verbunden ist.

9. Anordnung nach Anspruch 8, ferner ein Planungsmodul (245) umfassend, um ein Schleppschema zu planen, mit dem eine Positionierung des Ankers an der geplanten Zielposition (P1a) erreicht wird, während gleichzeitig vermieden wird, dass der zweite Abschnitt der Leine (3b) und der Anker mit der Anlage auf dem Meeresboden kollidieren.

10. Verfahren zum Simulieren von Meeresanlagen (MA) bei einer Offshore-Tätigkeit unter Verwendung der Anordnung nach einem der Ansprüche 1 bis 9, wobei die Meeresanlagen mindestens einen Anker, eine Leine, die den Anker mit einer Winde verbindet, und eine Trageplattform, die sich offshore zur Unterstützung der Winde befindet, umfassen, wobei die Simulation mindestens eine Berechnungsstufe zum Schätzen eines Zustands der Meeresanlagen unter Verwendung eines Berechnungsmodells und unter Verwendung der empfangenen Sensordaten (Ds) einschließt, die zu einem Zustand der Meeresanlage und/oder einer Umgebung (ME) gehören, in der die Meeresanlagen genutzt werden, wobei die Steuerung ferner das Empfangen der Eingangsdaten von einem Bediener zur Steuerung der Simulation und die Berechnung zusätzlicher Informationen, die zu einem Zustand der Meeresanlagen gehören, anhand der empfangenen Sensordaten und der Eingangsdaten unter Verwendung des Berechnungsmodells einschließt, wobei das Berechnungsmodell der Meeresanlagen (MA) mindestens die Spezifikation (21E) eines Ankers (1), eine Spezifikation (21C) einer Winde (9) und eine Spezifikation (21D1, 21D2) einer Leine (3) einschließt, die den Anker mit der Winde (9) verbindet, wobei die mindestens eine Leine als ein erster Abschnitt (3a), der sich zwischen der Winde (9) und einem Aufsetzpunkt (4) erstreckt, an dem die Leine (3) den Meeresboden (52) berührt, und als ein zweiter Abschnitt (3b) gestaltet ist, der sich zwischen dem Aufsetzpunkt (4) und dem Anker (1) erstreckt, **dadurch gekennzeichnet, dass** die zusätzlichen Informationen Informationen enthalten, die eine geschätzte Position des Ankers bezeichnen, und wobei die Sensordaten einen Wert, der auf eine gemessene Spannung in der Leine hinweist, einen Wert für den gemessenen Ablauf der Leine durch die Winde umfassen und wobei das Simulationssystem die geschätzte Position berechnet, und zwar durch Schätzen einer Bahn, entlang der der Anker erwartungsgemäß auf dem Meeresboden gezogen wurde, und zwar zwischen einer ursprünglichen Position, an der der Anker gesetzt wurde, bis zur geschätzten Position, an der unter Berücksichtigung dieser gemessenen Werte ein neuer Gleichgewichtspunkt zwischen den Zugkräften und der Reibung am Meeresboden erreicht wurde.

11. Verfahren nach Anspruch 10, wobei der Anker dynamisch geformt ist, und zwar (i) mit einer festen Position, wenn eine Kraft (F), die auf ihn wirkt, einen Schwellenwert (Ft) nicht überschreitet, (ii) verschoben, wenn die auf ihn wirkende Kraft den Schwellenwert erreicht, und (iii) die Leine bei einer konstanten Spannung haltend, wenn er damit gezogen wird, ungeachtet der Geschwindigkeit, mit der der Anker gezogen wird.

12. Verfahren nach Anspruch 10, eine erste Betriebsstufe (S3) umfassend, in der ein statischer Solver verwendet wird, um einen aktuellen Zustand der Meeresanlagen zu bestimmen, wobei der aktuelle Zustand mindestens den aktuellen Zustand des ersten Abschnitts (3a) der Leine (3) sowie den aktuellen Zustand des zweiten Abschnitts (3b) der Leine (3) einschließt, und eine zweite Betriebsstufe (S4) umfassend, in der ein dynamischer Solver verwendet wird, um einen Zustand der Meeresanlagen dynamisch zu schätzen, der aus den Kräften, die durch Stellantriebe in den Meeresanlagen ausgeübt werden, und aus den externen Kräften resultiert, die durch die Meeresumgebung ausgeübt werden.

13. Verfahren nach Anspruch 12, wobei der dynamische Solver eine Spezifikation der Meeresströmungen, um einen Zustand des ersten Abschnitts (3a) der Leine (3) zu schätzen, sowie eine Spezifikation des Meeresbodens verwendet, um den Zustand des zweiten Abschnitts (3b) der Leine (3) zu schätzen.

14. Verfahren nach Anspruch 12, wobei der statische Solver aktuelle oder historische Daten verwendet, die für die Meeresanlagen erfasst wurden, um den aktuellen Zustand der Meeresanlagen zu schätzen.

15. Verfahren nach Anspruch 10, wobei der Zustand eine Abwurfstelle einschließt, das heißt die Stelle, an der der Anker in dem Fall landen würde, dass ein Arbeitskabel bricht.

16. Verfahren nach Anspruch 10, wobei die mindestens eine Winde für ein automatisches Ablaufen der mindestens einen Leine in dem Fall sorgt, dass eine Spannung in der mindestens einen Leine einen Schwellenwert übersteigt.

17. Verfahren nach Anspruch 10, wobei die mindestens eine Winde ein Ausgangssignal bereitstellt, das durch den dynamischen Solver genutzt werden kann und auf das Ablaufen schließen lässt.

18. Verfahren nach Anspruch 16 oder 17, das eine Fehlermeldung in dem Fall vorsieht, dass das automatische Ablaufen eintritt.

19. Verfahren nach Anspruch 10, wobei das Berechnungsmodell ein Modell des Rutschens eines Ankerelements auf dem Meeresboden als eine konstante Spannungsverbindung einschließt.

20. Verfahren nach Anspruch 10, wobei die Offshore-Tätigkeit eine Anlegetätigkeit, eine Ankertätigkeit, eine Tätigkeit zum Bewegen einer Bohranlage, eine Auslegetätigkeit oder eine Bergungstätigkeit ist.

## Revendications

1. Disposition pour des opérations offshore, comprenant des actifs maritimes (MA) et un système de simulation (20), les actifs maritimes (MA) comprenant au moins une ancre (1), une ligne (3) couplant l'ancre avec un treuil (9) et une plate-forme de support mobile ou fixe (10, ou 11) située au large pour le support du treuil, le système de simulation comprenant un espace de stockage (21) stockant un modèle de calcul des actifs maritimes, des entrées (22) pour la réception de données de capteurs (Ds) concernant un état des actifs maritimes et/ou d'un environnement dans lequel les actifs maritimes sont utilisés, une interface utilisateur (23) pour permettre à un opérateur de surveiller et de fournir des données entrées pour contrôler la simulation, le système de simulation étant conçu pour calculer des informations supplémentaires concernant un état desdits actifs maritimes et pour la représentation graphique desdits actifs maritimes sur la base desdites données de capteurs reçues et de ladite entrée de contrôle à l'aide dudit modèle de calcul, ladite au moins une ligne étant modélisée en tant que première portion (3a) s'étendant entre le treuil (9) et un point d'atterrissage (4) où la ligne (3) touche le fond marin (52) et une deuxième portion (3b) s'étendant entre le point d'atterrissage (4) et l'ancre (1), **caractérisée en ce que** les informations supplémentaires comprennent des informations spécifiant une position estimée de ladite ancre, et lesdites données de capteurs comprenant une valeur indiquant une tension mesurée dans ladite ligne, une valeur pour le déroulement mesuré de ladite ligne par ledit treuil et le système de simulation calculant la position estimée à l'aide dudit mode de calcul en estimant une trajectoire entre une position couchée originale de ladite ancre et ladite position estimée, le long de laquelle il est prévu que l'ancre soit traînée le long du fond marin en tenant compte de ces valeurs mesurées afin d'atteindre un nouveau point d'équilibre entre les forces de traîne et la friction du fond marin.

2. Disposition selon la revendication 1, dans laquelle ladite ancre est modélisée de manière dynamique comme (i) ayant une position fixe si une force (F) exercée sur elle ne dépasse pas une valeur seuil (Ft), (ii) étant déplacée si la force exercée sur elle atteint ladite valeur seuil et (iii) conservant ladite ligne à une tension constante lorsqu'elle est tirée avec celle-ci, quelle que soit la vitesse avec laquelle l'ancre est tirée.

3. Disposition selon la revendication 1, dans laquelle le système de simulation est en outre conçu pour générer des signaux de commande d'actionneurs simulés pour des actionneurs simulés qui représentent les signaux de commande physiques qui seraient nécessaires pour contrôler des actionneurs dans lesdits actifs maritimes.

4. Disposition selon la revendication 1, dans laquelle ledit système de simulation comprend un solveur statique pour déterminer un état initial dudit actif maritime, et un solveur dynamique pour estimer un état desdits outils d'ancrage à l'aide d'un modèle de calcul dudit actif maritime, ce modèle comprenant également un ou plusieurs courants marins, l'atterrissage sur le fond marin et la friction survenant pendant ladite opération offshore.

5. Disposition selon la revendication 1, dans laquelle le système de simulation comprend un module de vérification de données entrées (241) pour vérifier si les données entrées sont dans des limites prédéterminées associées à l'état actuel des actifs maritimes tels que déterminé par le système de simulation.

6. Disposition selon la revendication 5, comprenant en outre un module d'adaptation permettant d'adapter les données entrées de façon à ce qu'elles soient dans un intervalle à l'intérieur desdites limites prédéterminées pour le système de simulation.

7. Disposition selon la revendication 5 ou 6, dans laquelle le module de vérification de données entrées (241) est un module de vérification des données du treuil.

8. Disposition selon l'une des revendications précédentes, comprenant un module d'alerte de collision (244) qui calcule une zone transversale (73) d'une forme estimée de la deuxième portion (3b) de la ligne et une position cible envisagée (P1a) de l'ancre (1) et qui génère un signal d'alerte si ladite zone transversale se superpose avec une zone de sécurité (75) associée à un actif sur le fond marin (5).

9. Disposition selon la revendication 8, comprenant en outre un module de planification (245) pour programmer un schéma de remorquage qui effectue un positionnement de l'ancre à la position cible envisagée (P1a) tout en évitant que la deuxième portion de la ligne (3b) et l'ancre entrent en collision avec l'actif sur le fond marin.

10. Procédé de simulation d'actifs maritimes (MA) dans une opération offshore à l'aide de la disposition selon l'une des revendications 1 à 9, lesdits actifs maritimes comprenant au moins une ancre, une ligne couplant l'ancre avec un treuil et une plate-forme de support située au large pour le support du treuil, ladite simulation comprenant au moins une étape de calcul pour l'estimation d'un état desdits actifs maritimes à l'aide d'un modèle de calcul et à l'aide de données de capteurs reçues (Ds) concernant un état des actifs maritimes et/ou d'un environnement (ME) dans lequel les actifs maritimes sont utilisés, ledit contrôle comprenant en outre la réception des données entrées provenant d'un opérateur pour le contrôle de ladite simulation, et le calcul d'informations supplémentaires concernant un état desdits actifs maritimes sur la base desdites données de capteurs reçues et des données entrées à l'aide dudit modèle de calcul, le modèle de calcul des actifs maritimes (MA) comprenant au moins une spécification (21E) d'une ancre (1), une spécification (21C) d'un treuil (9) et une spécification (21D1, 21D2) d'une ligne (3) couplant l'ancre avec le treuil (9), ladite au moins une ligne étant modélisée comme une première portion (3a) s'étendant entre le treuil (9) et un point d'atterrissage (4) où la ligne (3) touche le fond marin (52) et une deuxième portion (3b) s'étendant entre le point d'atterrissage (4) et l'ancre (1), **caractérisé en ce que** les informations supplémentaires comprennent des informations spécifiant une position estimée de ladite ancre, et lesdites données de capteurs comprenant une valeur indiquant une tension mesurée dans ladite ligne et une valeur pour le déroulement mesuré de ladite ligne par ledit treuil et le système de simulation calculant la position estimée en estimant une trajectoire entre une position couchée originale de ladite ancre et ladite position estimée, le long de laquelle il est prévu que l'ancre soit traînée le long du fond marin en tenant compte de ces valeurs mesurées pour atteindre un nouveau point d'équilibre entre les forces de traînée et la friction du fond marin.

11. Procédé selon la revendication 10, dans lequel ladite ancre est modélisée de manière dynamique comme (i) ayant une position fixe si une force (F) exercée sur elle ne dépasse pas une valeur seuil (Ft), (ii) étant déplacée si la force exercée sur elle atteint ladite valeur seuil et (iii) conservant ladite ligne à une tension constante lorsqu'elle est tirée avec celle-ci, quelle que soit la vitesse avec laquelle l'ancre est tirée.

12. Procédé selon la revendication 10, comprenant une première étape opérationnelle (S3), dans laquelle un solveur statique est utilisé pour déterminer un état actuel desdits actifs maritimes, l'état actuel comprenant au moins l'état actuel de ladite première portion (3a) de ladite ligne (3) et l'état actuel de ladite deuxième portion (3b) de ladite ligne (3) et comprenant une deuxième étape opérationnelle (S4) dans laquelle un solveur dynamique est utilisé pour estimer de manière dynamique un état desdits actifs maritimes résultant des forces exercées par les actionneurs dans lesdits actifs maritimes et des forces externes exercées par l'environnement marin.

13. Procédé selon la revendication 12, dans lequel ledit solveur statique utilise une spécification des courants marins pour estimer un état de ladite première portion (3a) de ladite ligne (3) et une spécification du fond marin pour estimer l'état de la deuxième portion (3b) de ladite ligne (3).

14. Procédé selon la revendication 12, dans lequel ledit solveur statique utilise des données actuelles ou historiques acquises pour les actifs maritimes afin d'estimer l'état actuel desdits actifs maritimes.

15. Procédé selon la revendication 10, dans lequel ledit état comprend un point de chute qui est le point où l'ancre atterrirait dans le cas d'une rupture de câble de travail.

16. Procédé selon la revendication 10, dans lequel ledit au moins un treuil effectue un déroulement automatique de l'au moins une ligne dans le cas où une tension dans ladite au moins une ligne dépasse une valeur seuil.

17. Procédé selon la revendication 10, dans lequel ledit au moins un treuil génère un signal de sortie destiné à être utilisé par ledit solveur dynamique, indiquant son déroulement.

18. Procédé selon la revendication 16 ou 17, générant un message d'erreur dans le cas d'un déroulement automatique.

19. Procédé selon la revendication 10, dans lequel ledit modèle de calcul comprend un modèle de glissement sur le fond marin d'un élément d'ancrage en tant que jonction de tension constante.

20. Procédé selon la revendication 10, dans lequel ladite opération offshore est une opération d'amarrage, une opération d'ancrage, une opération de déplacement de plate-forme, une opération de pose ou une opération de récupération.
